(19) **Europäisches Patentamt**
**European Patent Office**
**Office européen des brevets**

(11) **EP 4 070 068 B1**

(12) **FASCICULE DE BREVET EUROPEEN**

(45) Date de publication et mention
de la délivrance du brevet:
**05.03.2025 Bulletin 2025/10**

(21) Numéro de dépôt: **20841976.2**

(22) Date de dépôt: **04.12.2020**

(51) Classification Internationale des Brevets (IPC):
**G01M 15/14** *(2006.01)*  **F01D 21/04** *(2006.01)*
**F01D 21/00** *(2006.01)*

(52) Classification Coopérative des Brevets (CPC):
**G01M 15/14; F01D 21/003; F01D 21/04;**
F05D 2260/80

(86) Numéro de dépôt international:
**PCT/FR2020/052285**

(87) Numéro de publication internationale:
**WO 2021/111093 (10.06.2021 Gazette 2021/23)**

(54) **PROCEDE DE SURVEILLANCE D'UNE TURBOMACHINE, DISPOSITIF, SYSTEME, AERONEF ET PRODUIT PROGRAMME D'ORDINATEUR**

VERFAHREN ZUR ÜBERWACHUNG EINER TURBOMASCHINE, VORRICHTUNG, SYSTEM, FLUGZEUG UND COMPUTERPROGRAMMPRODUKT

METHOD FOR MONITORING A TURBOMACHINE, DEVICE, SYSTEM, AIRCRAFT AND COMPUTER PROGRAM PRODUCT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2019 FR 1913699**

(43) Date de publication de la demande:
**12.10.2022 Bulletin 2022/41**

(73) Titulaires:
• **SAFRAN**
**75015 Paris (FR)**
• **SAFRAN AIRCRAFT ENGINES**
**75015 Paris (FR)**

(72) Inventeurs:
• **ABBOUD, Dany**
**77550 MOISSY-CRAMAYEL (FR)**
• **EL BADAOUI, Mohammed**
**77550 MOISSY-CRAMAYEL (FR)**
• **TABLEAU, Nicolas Paul**
**77550 MOISSY-CRAMAYEL (FR)**

(74) Mandataire: **Regimbeau**
**20, rue de Chazelles**
**75847 Paris Cedex 17 (FR)**

(56) Documents cités:
WO-A1-2018/197086    RU-C1- 2 280 238
RU-C1- 2 670 771    RU-C9- 2 670 771

**Description**

**Domaine technique général et art antérieur**

La présente divulgation concerne le domaine général de la surveillance des turbomachines. Plus particulièrement la présente divulgation concerne un procédé de surveillance apte à la détection de touches entre un stator et un rotor d'une turbomachine. La présente divulgation concerne aussi un dispositif et un système pour mettre en œuvre un tel procédé. Ces touches, entre le stator et le rotor de la turbomachine, sont considérées comme des anomalies.

Les turbomachines sont des machines qui permettent de transformer l'énergie cinétique d'un fluide en énergie mécanique (et inversement) par l'intermédiaire d'un ensemble rotatif appelé rotor. La partie statique de la turbomachine est appelée le stator.

Ces turbomachines ont différentes conceptions selon leurs fonctions : turbines, pompes, compresseurs, turbocompresseurs, turbomoteurs, etc. Néanmoins, la plupart d'entre elles ont une architecture commune constituée d'un rotor (une partie tournante montée sur un arbre) et d'un stator (une partie fixe qui est relié à la structure de l'aéronef) par l'intermédiaire d'un roulement. Le rotor comprend une pluralité d'aubes destinées à accélérer le flux d'air s'écoulant à travers la turbomachine. Pour établir un mouvement relatif de rotation entre le rotor et le stator, les aubes sont nécessairement espacées du stator et cet espacement est communément appelé le « jeu en sommet d'aube » ou « JSA». Dans un aéronef, le jeu en sommet d'aube est un paramètre de conception et de fonctionnement important d'une turbomachine. La minimisation de ce jeu évite que des quantités excessives du flux d'air contournent la rangée d'aubes en rotation et, donc, améliore le rendement énergétique de la turbomachine. Toutefois, ce jeu est sujet à des fluctuations dues à des dilatations thermiques et à des phénomènes mécaniques dépendants du cycle de fonctionnement de la turbomachine.

Dans certains cas, ces fluctuations du jeu interviennent de manière asymétrique et le jeu entre certaines aubes du rotor et le stator devient nul. Un jeu nul entraine un frottement (une touche) entre la partie tournante et la partie fixe de la turbomachine. Cela peut entraîner une usure excessive de la surface abradable et une perte d'efficacité causée par l'augmentation du débit de fuite au niveau de la pointe des aubes.

Pour ces raisons, il serait souhaitable de pouvoir détecter et surveiller les instants de touches. L'identification des instants et des amplitudes des touches permet de surveiller et de contrôler ces phénomènes dans un cadre de surveillance préventive. L'amplitude des indicateurs proposés peut être utilisée indirectement pour évaluer l'usure des interfaces en contact suite à la touche, dans un cadre de maintenance préventive.

RU 2 670 771 C1 décrit l'application d'une transformée de Fourier rapide à un signal capturé par une jauge de contrainte pour obtenir les valeurs des fréquences et des amplitudes des oscillations d'un aube en rotation. Une transformation en ondelettes du signal permet, au voisinage d'une violation de périodicité, de déterminer la nature du contact de l'aube avec le corps d'une turbomachine.

WO 2018/197086 A1 décrit un procédé consistant à soumettre un élément de rotor à un signal initial de courant alternatif présentant une fréquence prédéfinie, à détecter des valeurs de mesure qui représentent une partie de fuite, évacuée par le carter, dudit signal initial, les valeurs de mesure représentant la partie de fuite étant identifiées par le biais de la fréquence prédéfinie et à détecter un effleurement du carter par une aube mobile sur la base de la grandeur et/ou de la variation dans le temps des valeurs de mesure détectées.

RU 2 280 238 C1 propose d'appliquer une ou plusieurs bandes constituées d'un matériau conducteur de courant afin de réaliser des électrodes de capteur de capacité. L'amplitude d'un jeu entre les aubes et le carter pendant la rotation de la turbomachine est déterminée par l'amplitude de la tension de sortie du capteur.

**Présentation générale de l'invention**

Dans ce cadre, la présente invention résout le problème technique de la surveillance d'une turbomachine, en proposant en particulier, un procédé, un dispositif, un système, un aéronef et un produit programme d'ordinateur aptes à effectuer cette surveillance.

Il est ainsi proposé, selon un premier mode de réalisation, un procédé de surveillance d'une turbomachine comprenant un stator et un rotor. Le procédé comprend une étape d'acquisition d'un signal d'entrée représentatif d'une déformation du stator ou du rotor de la turbomachine. Le signal d'entrée a été capturé par une jauge de déformation fixée au stator ou au rotor. Le signal d'entrée comprend une première composante représentative de déformations du stator ou du rotor causées par une rotation des aubes du rotor par rapport au stator, et une deuxième composante représentative de déformations causées par des éléments distincts des aubes du rotor. Le procédé comprend une étape de rééchantillonnage du signal d'entrée pour obtenir un signal d'entrée rééchantillonné comprenant un nombre entier prédéfini d'échantillons par tour du rotor de la turbomachine. Le procédé comprend aussi une étape de traitement du signal d'entrée rééchantillonné qui comprend: un filtrage du signal d'entrée rééchantillonné permettant d'obtenir un signal d'entrée filtré dans lequel la deuxième composante est atténuée et, une séparation du signal d'entrée filtré en une pluralité de troisièmes composantes, chaque troisième composante étant représentative d'une contribution à la déformation causée par une aube associée respective.

Le filtrage de l'étape de traitement du signal comprend les étapes suivantes : une étape de détermination de valeurs d'une pluralité de paramètres d'un modèle représentatif du signal d'entrée rééchantillonné, et une étape de détermination d'un signal d'entrée modélisé en utilisant le modèle ainsi que les valeurs de la pluralité de paramètres. La séparation comprend un fenêtrage du signal d'entrée modélisé à l'aide de différentes fenêtres temporelles de sorte à obtenir la pluralité de troisièmes composantes.

Le procédé comprend aussi une étape de détection, dans une troisième composante, d'une touche entre l'aube associée à la troisième composante et le stator.

Ce procédé offre les avantages suivants :

- L'utilisation d'une mesure de déformation, et le traitement du signal associé permettent d'obtenir une bonne précision de la détection des touches. En effet, ce procédé permet en particulier de limiter les effets du bruit aérodynamique et des interférences pouvant provenir de différentes sources mécaniques et/ou électriques.
- La jauge de déformation est en outre peu sensible vis-à-vis des contraintes physiques subies par la turbomachine. En particulier, la jauge de déformation présente une résistance supérieure à la température et est plus résistante que d'autres types de capteurs permettant de déterminer une grandeur physique liée à une turbomachine. Par exemple, une jauge de déformation est en particulier plus résistante qu'un capteur capacitif.

L'étape de rééchantillonnage du signal d'entrée offre l'avantage de permettre la synchronisation du signal avec l'angle de rotation de l'arbre de la turbomachine. En effet, la notion de périodicité dans les signaux mécaniques est intrinsèquement liée à l'angle de rotation et, donc, l'analyse dans le domaine angulaire permet de compenser les fluctuations de vitesse (qui peuvent provoquer une légère variation de la durée temporelle des périodes). Cette étape offre de plus l'avantage d'obtenir un signal d'entrée rééchantillonné ayant un nombre entier et fixe d'échantillons par tour de la turbomachine.

Le filtrage, réalisé dans l'étape de traitement du signal, offre l'avantage de limiter, dans la détection des touches, l'influence des phénomènes de déformation, autres que ceux qui résultent de la rotation des aubes du rotor par rapport au stator.

L'étape de détection, dans une troisième composante, d'une touche entre l'aube associée à la troisième composante et le stator permet de détecter quelle aube est responsable d'une touche.

Le procédé de surveillance peut être mis en œuvre de la manière suivante.

Dans un mode de réalisation, l'étape de détermination des valeurs de la pluralité de paramètres détermine les valeurs de la pluralité de paramètres comme étant celles minimisant un écart entre le signal d'entrée rééchantillonné et un signal d'entrée modélisé en utilisant le modèle représentatif ainsi que lesdites valeurs.

Dans un mode de réalisation, l'étape de détermination des valeurs de la pluralité de paramètres du modèle utilise l'équation suivante :

$$\widehat{\boldsymbol{b}} = \left(\boldsymbol{\Phi}^{\mathbf{T}}\boldsymbol{\Phi}\right)^{-1}\boldsymbol{\Phi}^{\mathbf{T}}\boldsymbol{x}$$

dans laquelle :

$\widehat{\boldsymbol{b}}$

est un vecteur colonne de taille

$P$

contenant les valeurs de

$P$

paramètres du modèle représentatif,

$\boldsymbol{\Phi}$

est une matrice de taille

$$Q * P$$

dans laquelle l'élément à la ligne

$q$

et la colonne

$p$

a la valeur

$$p^{q-1}$$

,

*x*

est un vecteur colonne de taille

*Q*

contenant des échantillons du signal d'entrée rééchantillonné, durant un nombre

*Q*

de tours du rotor.

Ce mode de réalisation permet d'avoir une étape de détermination des valeurs des paramètres du modèle présentant une complexité calculatoire plus faible qu'en utilisant d'autres méthodes.

Dans un mode de réalisation, l'étape de détermination d'un signal d'entrée modélisé utilise l'équation suivante :

$$\widehat{x} = \Phi\widehat{b}$$

dans laquelle :

$\hat{b}$

est un vecteur colonne de taille

*P*

contenant les valeurs respectives de

*P*

paramètres du modèle représentatif,

$\Phi$

est une matrice de taille

$$Q * P$$

dans laquelle l'élément à la ligne

*q*

et la colonne

*p*

a la valeur

$$p^{q-1}$$

,

$\hat{x}$

est un vecteur colonne de taille

*Q*

contenant des échantillons du signal d'entrée modélisé, pour un nombre

*Q*

de tours du rotor.

Ce mode de réalisation permet d'avoir une étape de détermination du signal d'entrée modélisé présentant une complexité calculatoire plus faible qu'en utilisant d'autres méthodes.

Dans un mode de réalisation, la séparation utilise l'équation suivante :

$$\hat{x}_r[n] = \hat{x}[n]F(r - r/R)$$

dans laquelle :

$$\hat{x}_r[n]$$

est l'échantillon
*n*
de la troisième composante associée à l'aube
*r* ,

$$\hat{x}[n]$$

est l'échantillon
*n*
du signal modélisé,

$$F(r) = \sum_{q=1}^{Q} f[n - q.N]$$

avec

$$f[n] = \begin{cases} 1 & si \quad -r/2R \le n \le r/2R \\ 0 & ailleurs \end{cases}$$

est un signal fenêtré associé à l'aube
*r,*
*Q*
est un nombre de tours du rotor pendant une durée total du signal d'entrée modélisé,
*R*
est un nombre total d'aubes du rotor.

Dans un mode de réalisation, l'étape de détection, dans une troisième composante, d'une touche entre l'aube associée à la troisième composante et le stator, comprend une étape de détermination d'une énergie de la troisième composante sur au moins un premier tour du rotor. L'étape de détection comprend aussi une étape de comparaison entre l'énergie déterminée et un seuil prédéterminé, la touche étant détectée ou non en fonction de la comparaison.

Dans un mode de réalisation, l'étape de détermination de l'énergie de la troisième composante utilise l'équation suivante :

$$I_r[q] = \sqrt{\frac{1}{N} \sum_{\bar{n}=1}^{N} \hat{x}_r[\bar{n} + (q-1).N]^2}$$

dans laquelle :

$I_r[q]$
est la valeur de l'énergie, sur le tour
*q*
du rotor, de la troisième composante associée à la aube
*r*
*N*
est le nombre d'échantillons du signal d'entrée modélisé dans le tour
*q*
$\hat{x}_r[n]$
est l'échantillon
*n*
de la troisième composante associée à la aube
*r*

Dans un mode de réalisation, le seuil prédéterminé est calculé en fonction des équations suivantes :

$$\mu_r^{(ref)} = \frac{1}{Q_{ref}} \sum_{q=1}^{Q_{ref}} I_r[q]$$

$$\sigma_r^{(ref)} = \sqrt{\frac{1}{Q_{ref}} \sum_{q=1}^{Q_{ref}} I_r[q]^2}$$

$$\lambda_r = \mu_r^{(ref)} + 3\sigma_r^{(ref)}$$

dans lesquelles :

$\lambda_r$
est le seuil prédéterminé associé à l'aube

$r$

$Q_{ref}$
est un nombre de tours de rotor prédéterminé,

$I_r[q]$
est la valeur de l'énergie, sur le tour

$q$
, de la troisième composante associée à l'aube

$r$.

Ce mode de réalisation permet de régler facilement le seuil qui permet de détecter une touche. En effet, il se base sur l'énergie des échantillons des troisièmes composantes obtenus par le dispositif de surveillance durant des cycles de référence. La détermination du seuil de détection est donc réalisable en utilisant le procédé implémenté dans le dispositif de surveillance, sans avoir besoin d'un procédé spécifique pour déterminer le seuil de détection. De plus ce mode de réalisation permet de déterminer le seuil de détection en se basant directement sur la turbomachine.

Il est aussi proposé, selon un mode de réalisation, un dispositif de surveillance d'une turbomachine comprenant un stator et un rotor. Le dispositif comprend une entrée pour recevoir un signal d'entrée représentatif d'une déformation du stator ou du rotor. Le signal d'entrée a été capturé par une jauge de déformation fixée au stator ou au rotor. Le signal d'entrée comprend une première composante représentative de déformations du stator ou du rotor causées par une rotation des aubes du rotor par rapport au stator, et une deuxième composante représentative de déformations du stator ou du rotor causées par des éléments distincts des aubes du rotor. Le dispositif comprend une unité de traitement de données configurée pour réaliser les étapes suivantes : une étape d'acquisition du signal d'entrée capturé par la jauge de déformation fixée au stator ou au rotor, et une étape de rééchantillonnage du signal d'entrée pour obtenir un signal d'entrée rééchantillonné comprenant un nombre entier prédéfini d'échantillons par tour du rotor de la turbomachine et une étape de traitement du signal d'entrée rééchantillonné qui comprend un filtrage du signal d'entrée rééchantillonné permettant d'obtenir un signal d'entrée filtré dans lequel la deuxième composante est atténuée et une séparation du signal d'entrée filtré en une pluralité de troisièmes composantes, chaque troisième composante étant représentative d'une contribution à la déformation causée par un aube associée respective. Le filtrage de l'étape de traitement du signal comprend les étapes suivantes : une étape de détermination de valeurs d'une pluralité de paramètres d'un modèle représentatif du signal d'entrée rééchantillonné, et une étape de détermination d'un signal d'entrée modélisé en utilisant le modèle ainsi que les valeurs de la pluralité de paramètres. La séparation comprend un fenêtrage du signal d'entrée modélisé à l'aide de différentes fenêtres temporelles de sorte à obtenir la pluralité de troisièmes composantes. Le procédé comprend également une étape de détection, dans une troisième composante, d'une touche entre l'aube associée à la troisième composante et le stator.

Ce dispositif offre les avantages suivants :

- L'utilisation d'une mesure de déformation, et le traitement du signal associé, permettent d'obtenir une bonne précision de la détection d'une touche. En effet, ce procédé permet en particulier de limiter les effets du bruit aérodynamique et des interférences pouvant provenir de différentes sources mécaniques et/ou électriques.
- La jauge de déformation est en outre peu sensible vis-à-vis des contraintes physiques subies par la turbomachine. En particulier, la jauge de déformation présente une résistance supérieure à la température et est plus résistante que d'autres types de capteurs permettant de déterminer une grandeur physique liée à une turbomachine. Par exemple, une jauge de déformation est en particulier plus résistante qu'un capteur capacitif.

Il est aussi proposé, selon un mode de réalisation, un système de surveillance comprenant le dispositif de surveillance décrit précédemment, et une jauge de déformation propre à délivrer un signal d'entrée représentatif d'une déformation du stator ou du rotor de la turbomachine. Dans le cadre de ce système, la jauge de déformation est reliée à l'entrée du dispositif de surveillance.

Il est aussi proposé, selon un mode de réalisation, un aéronef, qui comprend une turbomachine. La turbomachine comprend un stator et un rotor propre à être entrainé en rotation par rapport au stator, et un système de surveillance tel que présenté précédemment, dans lequel la jauge de déformation est fixée au stator ou au rotor.

Il est aussi proposé, selon un mode de réalisation, un produit programme d'ordinateur comprenant des instructions de code de programme pour l'exécution des étapes du procédé de surveillance d'une turbomachine, tel que présenté précédemment, lorsque ce produit programme est exécuté par au moins une unité de traitement de données.

## Brève description des dessins

D'autres caractéristiques et avantages de l'invention ressortiront encore de la description qui suit, laquelle est purement illustrative et non limitative, et doit être lue en regard des figures annexées :

- La figure 1 représente un aéronef comportant une turbomachine et un dispositif de surveillance de la turbomachine.

- La figure 2 représente les étapes 201 et 202 du procédé de surveillance d'une turbomachine.

- La figure 3 représente le résultat de l'étape de filtrage du signal reçu de la jauge de déformation.

- La figure 4 représente le résultat de l'étape de séparation du signal filtré.

- La figure 5 représente le résultat de l'étape de détection des touches en utilisant le signal séparé.

- La figure 6 illustre l'étape de séparation du signal d'entrée filtré.

## Description d'un ou plusieurs modes de réalisation

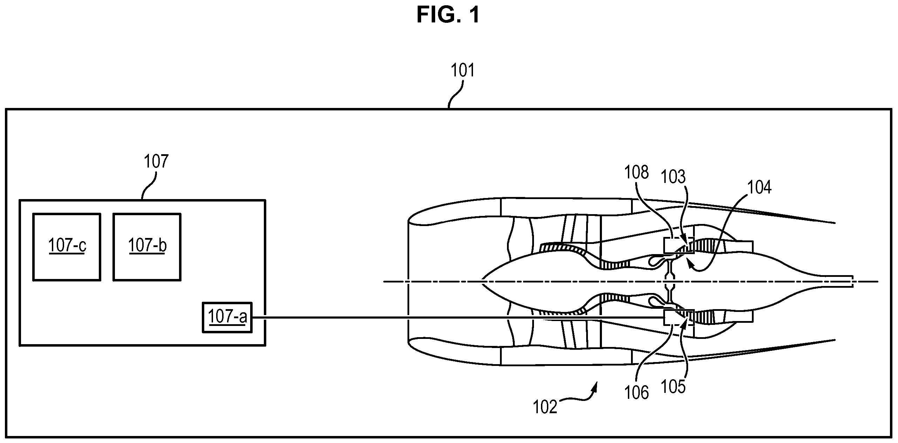

La figure 1 représente de manière schématique un aéronef 101. L'aéronef 101 comprend une turbomachine 102.

Dans l'exemple illustré sur la figure 1, la turbomachine 102 comprend une nacelle, une soufflante, un corps basse pression, un corps haute pression et une chambre de combustion. Le corps basse pression comprend un compresseur basse pression, une turbine basse pression et un arbre basse pression reliant le compresseur basse pression à la turbine basse pression. Le corps haute pression comprend un compresseur haute pression, une turbine haute pression et un arbre haute pression reliant le compresseur haute pression à la turbine haute pression.

Lorsque la turbomachine est en fonctionnement, la turbine haute pression entraine en rotation le compresseur haute pression via l'arbre haute pression. La turbine basse pression entraine en rotation le compresseur basse pression et la soufflante via l'arbre basse pression. La soufflante génère un flux d'air primaire et un flux d'air secondaire (ou flux de dérivation). Le flux d'air primaire passe successivement à travers le compresseur basse pression, le compresseur haute pression, la chambre de combustion, la turbine haute pression et la turbine basse pression.

La turbine haute pression comprend un stator 103 et un rotor 104 propre à être entrainé en rotation par rapport au stator 103. Le stator 103 est monté fixe sur une structure de l'aéronef, par exemple sur le carter de la turbine haute pression. Le rotor 104 comprend une pluralité d'aubes 105. Le turbomoteur 102 comprend aussi une jauge de déformation 106. Sur la figure 1, la jauge est fixée au stator de la turbine haute pression, mais il est aussi possible de la fixer au rotor de la turbine haute pression.

L'aéronef comprend aussi un dispositif 107 de surveillance apte à la détection d'une touche entre le stator 103 et le rotor 104. Ce dispositif 107 comprend une entrée 107-a pour recevoir, en provenance de la jauge de déformation 106, un signal d'entrée représentatif d'une déformation du stator 103. Cette entrée 107-a comporte une chaine d'acquisition assurant entre autres la numérisation du signal d'entrée. La fréquence d'échantillonnage du signal d'entrée est configurable. Cette fréquence, qui dépend de la turbomachine, est de manière avantageuse de l'ordre de plusieurs dizaines de kHz. Ce dispositif comprend aussi une unité de traitement de données 107-b. Cette unité de traitement de données 107-b est configurée pour exécuter les étapes d'un procédé de surveillance apte à la détection d'une touche entre le stator 103 et le rotor 104 de la turbomachine 102. Typiquement, l'unité 107-b de traitement de données comprend au moins un processeur pour mettre en œuvre un programme d'ordinateur. Ce programme d'ordinateur comprend des instructions de code de programme configurées pour mettre en œuvre le procédé de surveillance de la turbomachine 102, lorsque ces instructions sont exécutées par le processeur de l'unité de traitement de données 107-b. Par ailleurs, le dispositif comprend également une mémoire 107-c pour mémoriser des données, notamment un signal d'entrée reçu de la jauge de déformation 106.

Dans un mode de réalisation, un capteur 108, donnant une information représentative des instants de passages des aubes, est placé sur la turbomachine 102. Ce capteur 108 est généralement placé sur le stator. Ce capteur 108, qui permet d'indiquer les instants de passages des aubes, est aussi connu sous le nom de « capteur top-pale ». Ce capteur 108 peut par exemple être une sonde optique (aussi connu sous le nom de probe optique) mesurant de manière optique le passage des aubes.

Le dispositif de surveillance 107 permet d'obtenir en sortie :

- les indications des touches des aubes,
- le seuil de détection associé à ces touches et
- les instants de ces touches.

Il est possible d'afficher ces informations sur un écran ou de les stocker dans la mémoire 107-c pour éventuellement les transmettre à un autre dispositif par exemple une station de surveillance fixe.

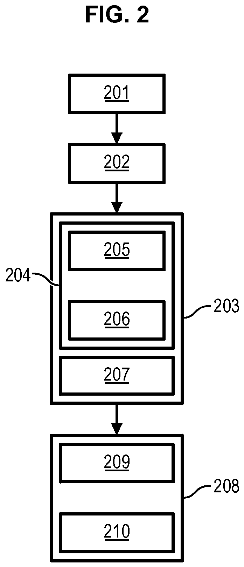

En référence à la figure 2, le dispositif 107 de surveillance apte à la détection d'une touche, entre le stator 103 et le rotor 104 de la turbomachine 102, présenté sur la figure 1, fonctionne comme suit.

Dans une première étape 201, l'entrée 107-a du dispositif 107 acquiert un signal d'entrée. Ce signal d'entrée est représentatif d'une déformation du stator 103 ou du rotor 104 de la turbomachine 102. Le signal d'entrée a été généré par la jauge de déformation 106 fixée au stator 103 ou au rotor 104. Le signal d'entrée comprend une première composante représentative de déformations du stator 103 ou du rotor 104 causées par une rotation des aubes 105 du rotor 104 par rapport au stator 103, et une deuxième composante représentative de déformations causées par des éléments distincts des aubes 105 du rotor 104.

Dans un mode de réalisation, le signal acquis par la jauge de déformation 106 est un signal échantillonné à une fréquence d'échantillonnage

$F_s$

(cette dernière est par exemple de l'ordre de 100 kHz).

L'unité de traitement 107-b réalise ensuite une étape 202 de rééchantillonnage du signal d'entrée, pour obtenir un signal d'entrée rééchantillonné comprenant un nombre entier prédéfini d'échantillons par tour du rotor de la turbomachine. Ce rééchantillonnage peut être qualifié d'échantillonnage angulaire.

Le rééchantillonnage du signal reçu de la jauge de déformation 106 utilise le signal de position des aubes généré par le capteur 108. Le capteur 108 génère un signal de position représentatif des instants de passage des aubes 105 devant le capteur 108. Il est aussi possible d'utiliser une indication du nombre d'aubes 105 du rotor 104. Le signal obtenu après rééchantillonnage est un signal « angulaire » (c.a.d. échantillonné à des pas angulaires fixes). Ce signal rééchantillonné est obtenu par une interpolation du signal reçu de la jauge de déformation 106. Le signal rééchantillonné est constitué d'échantillons espacés d'un angle

$\Delta\theta$

, qui est la période d'échantillonnage angulaire. De plus, à chaque tour du rotor, sont associés exactement

$N$

échantillons du signal rééchantillonné.

Le dispositif réalise ensuite une étape 203 de traitement du signal d'entrée rééchantillonné pour détecter la touche.

L'étape 203 de traitement du signal comprend un filtrage 204 du signal d'entrée rééchantillonné. Ce filtrage permet d'obtenir un signal filtré dans lequel la deuxième composante est atténuée.

Cette deuxième composante peut être considérée comme du bruit. Ainsi le signal d'entrée a la forme suivante :

$$\forall n \in \{1, ..., L\} \qquad x[n] = d[n] + w[n]$$

où

$L$

représente le nombre total d'échantillons,

$n$

représente un échantillon donné,

$x[n]$

représente l'échantillon

$n$

du signal d'entrée,

$d[n]$

représente la première composante de l'échantillon

$n$

du signal d'entrée,

$w[n]$

représente la deuxième composante de l'échantillon

$n$

du signal d'entrée .

Ce filtrage 204 comprend une étape 205 de détermination de valeurs d'une pluralité de paramètres d'un modèle représentatif du signal d'entrée rééchantillonné, puis une étape 206 de détermination d'un signal d'entrée modélisé en utilisant le modèle ainsi que les valeurs de la pluralité de paramètres. L'étape 203 de traitement du signal comprend également une séparation 207 du signal d'entrée rééchantillonné en une pluralité de troisièmes composantes. Chaque troisième composante est représentative d'une contribution à la déformation causée par un aube associée respective. Cette séparation 207 est réalisée sur le signal d'entrée modélisé.

Ensuite, l'unité de traitement de données 107-b réalise une étape 208 de détection, dans les troisièmes composantes, d'une touche entre l'aube 105, associée à la troisième composante, et le stator 103.

Une manière de réaliser cette détection 208, est par exemple de réaliser une étape 209 de détermination d'une énergie de la troisième composante sur au moins un premier tour du rotor puis une étape 210 de comparaison entre l'énergie déterminée et un seuil prédéterminé. La touche est détectée ou non en fonction de la comparaison. Cette manière de réaliser cette détection 208 est purement illustrative et non limitative, et il est possible de réaliser cette détection 208 d'autres manières.

Dans cette divulgation, on utilisera deux notations pour référencer un échantillon :

$n$

et

$\bar{n}$

$n$

est utilisé pour référencer de manière absolue un échantillon, il s'agit du

$n$

ième l'échantillon en considérant comme temps initial le début du signal d'entrée rééchantillonné.

$\bar{n}$

est utilisé pour référencer de manière relative un échantillon, par rapport à un des tours. Ainsi,

$\bar{n}$

désigne le

$\bar{n}$

ième échantillon en considérant comme instant initial le début du tour de rotor au cours duquel l'échantillon a été enregistré.

En utilisant cette notation, il n'existe qu'un unique échantillon

$n$

mais il existe une pluralité d'échantillons

$\bar{n}$

. Chacun des échantillons

$\bar{n}$

étant associé respectivement à l'un des

$Q$

tour du rotor de la turbomachine.

Le passage de

$n$

à

$\bar{n}$

est réalisé en utilisant l'équation

$$\bar{n} = \lfloor (n-1)/N \rfloor + 1$$

où

$N$

représente le nombre d'échantillon par tour et où

$$\lfloor a/b \rfloor$$

désigne le reste de la division de

$a$

par

$b$

De manière équivalente la position absolue

$n$

de l'échantillon

$\bar{n}$

du tour

$q$

est donnée par l'équation

$$n = N * (q-1) + n$$

L'unité de traitement de données 107-b peut réaliser l'étape 205 de détermination de différentes manières. A titre d'exemple illustratif et non limitatif, il est possible de réaliser cette étape en considérant que les valeurs de paramètres sont celles qui minimisent un écart entre le signal d'entrée généré par la jauge de déformation 106 et un signal d'entrée modélisé en utilisant le modèle représentatif ainsi que lesdites valeurs.

Le signal d'entrée généré par la jauge de déformation 106 peut se modéliser ainsi :

$$\forall q \in \{1, ..., Q\} \, \forall \bar{n} \in \{1, ..., N\} \quad s_q[\bar{n}] = \sum_{p=0}^{P} b_p[\bar{n}] q^p$$

Où :

$q$

représente l'un des tours de la turbomachine 102,

$Q$

représente le nombre de tours sur lesquels le signal d'entrée,

$\bar{n}$

représente un des échantillons, de l'un des tours,

$N$

représente le nombre d'échantillons sur chaque tour,

$s_q[\bar{n}]$

représente le

$\bar{n}$

ième échantillon du signal modélisé associé au tour

$q$

du turbomoteur,

$P$

est le nombre de paramètres,

$b_p[\bar{n}]$

représente le paramètre

$p$

du modèle représentatif associé à l'échantillon

$\bar{n}$

La valeur

$P$

de l'ordre du polynôme et donc du nombre de paramètres, doit être suffisamment élevée pour prendre en compte les variations d'amplitudes du signal d'entrée. De manière avantageuse,

$P$

aura une valeur comprise entre 5 et 20.

En utilisant ce modèle du signal d'entrée, les valeurs des paramètres seront obtenues via l'équation :

$$\forall \bar{n} \in \{1, ..., N\} \quad \widehat{\boldsymbol{b}}[\bar{n}] \;=\; \operatorname{argmin}\left( \sum_{q=1}^{Q} \left( \sum_{p=0}^{P} b_p[\bar{n}] q^p - x_q[\bar{n}] \right)^2 \right)$$

où

$x_q[\bar{n}]$

est l'échantillon du signal d'entrée généré par la jauge de déformation 106 à l'instant

$\bar{n}$

du tour

$q$

,

$\widehat{\boldsymbol{b}}[\bar{n}]$

est un vecteur colonne de taille

$P$

contenant les valeurs de

$P$

paramètres du modèle représentatif associé à l'échantillon

$\bar{n}$

A titre d'exemple non limitatif et purement illustratif, il est possible de réaliser la détermination des valeurs de cette pluralité de paramètres du modèle en utilisant l'équation suivante :

$$\widehat{\boldsymbol{b}}[\bar{n}] = \left( \boldsymbol{\Phi}^{\mathbf{T}} \boldsymbol{\Phi} \right)^{-1} \boldsymbol{\Phi}^{\mathbf{T}} x[\bar{n}]$$

dans laquelle :

$\hat{\boldsymbol{b}}[\bar{n}]$

est un vecteur colonne de taille

$P$

contenant les valeurs de

$P$

paramètres du modèle représentatif associé à l'échantillon

$\bar{n}$

,

$\Phi$

est une matrice de taille

$$Q * P$$

dans laquelle l'élément à la ligne

$q$

et la colonne

$p$

a la valeur

$$p^{q-1}$$

,

$\boldsymbol{x}[\bar{n}]$

est un vecteur colonne de taille

$Q$

contenant les échantillons du signal d'entrée généré par la jauge de déformation et éventuellement rééchantillonné, durant un nombre

$Q$

de tours du rotor, les échantillons ayant tous la même position relative

$\bar{n}$

dans le tour du rotor et chaque échantillon étant associé respectivement à l'un des

$Q$

tours du rotor.

Suite à la détermination de cette pluralité de paramètres, le dispositif 107 de surveillance détermine un signal d'entrée modélisé. Cette étape 206 de détermination d'un signal d'entrée modélisé peut être réalisée de différentes manières. A titre illustratif et non limitatif, le signal d'entrée modélisé

$\boldsymbol{x}[\bar{n}]$

à la forme

$$\hat{x}[\bar{n}] = \Phi \hat{\boldsymbol{b}}[\bar{n}]$$

, dans laquelle :

$\hat{\boldsymbol{b}}$

$[\bar{n}]$

est le vecteur colonne de taille

$P$

contenant les valeurs de

$P$

paramètres du modèle représentatif associé à l'échantillon

$\bar{n}$

,

$\Phi$

est une matrice de taille

$$Q*P$$

dans laquelle l'élément à la ligne

$q$

et la colonne

$p$

a la valeur

$$p^{q-1}$$

,

$\hat{\boldsymbol{x}}[\overline{n}]$

est un vecteur colonne de taille

$Q$

contenant des échantillons du signal d'entrée modélisé pour un nombre

$Q$

de tours du rotor, les échantillons ayant tous la même position relative

$\overline{n}$

dans le tour du rotor et chaque échantillon étant associé respectivement à l'un des

$Q$

tours du rotor.

Dans ce mode de réalisation, le signal d'entrée modélisé

$\boldsymbol{x}[\overline{n}]$

est le signal d'entrée généré par la jauge de déformation 106, éventuellement rééchantillonné, et filtré dans lequel les deuxièmes composantes ont été atténuées.

L'unité de traitement 107-b est configurée pour séparer la contribution des différentes aubes 105. Cette étape 207 de séparation est réalisée sur la base du signal d'entrée rééchantillonné qui a été filtré pour atténuer les deuxièmes composantes. Le signal sur lequel est basée la séparation est le signal d'entrée modélisé

$\boldsymbol{x}[\overline{n}]$

. Cette séparation 207 est réalisée par un fenêtrage du signal d'entrée modélisé à l'aide de différentes fenêtres temporelles. Ce fenêtrage permet d'obtenir la pluralité de troisièmes composantes.

Cette séparation peut être réalisée de différentes manières. A titre d'exemple illustratif et non limitatif, les échantillons des troisièmes composantes

$\hat{x}_r[n]$

seront obtenus en multipliant les échantillons du signal d'entrée modélisé

$\hat{x}[n]$

par les échantillons d'un signal

$F(n)$

comportant une fenêtre temporelle. Différents types de fenêtres peuvent être utilisés, tels que par exemple une fenêtre gaussienne, une fenêtre de Hanning, ou une fenêtre rectangulaire. Dans le cas d'une fenêtre rectangulaire, nous obtenons :

$$\hat{x}_r[n] = \hat{x}[n]F(r - r/R)$$

où :

$\hat{x}_r[n]$

est l'échantillon

$n$

de la troisième composante associée à l'aube

$r$

,

$\hat{x}[n]$

est l'échantillon

*n*
du signal modélisé,

$$F(r) = \sum_{q=1}^{Q} f[n - q.N]$$

avec

$$f[n] = \begin{cases} 1 & si \ -r/2R \le n \le r/2R \\ 0 & ailleurs \end{cases}$$

est un signal fenêtré associé à l'aube
*r*
,
*Q*
est un nombre de tours du rotor réalisés pendant une durée total du signal d'entrée modélisé,
*R*
est un nombre total d'aubes du rotor.

Afin de caler le début des fenêtres temporelles, il est possible d'utiliser le signal de position provenant du capteur 108, donnant une information représentative des instants de passages des aubes. Grâce à ce capteur 108, il est possible de connaitre la position de chaque aube et d'appliquer le signal fenêtré de manière à favoriser les instants associés aux aubes d'intérêts.

L'obtention de

$\hat{x}[n]$
à partir du vecteur
$\mathbf{x}[\bar{n}]$
est réalisé de la manière suivante. Dans une première étape le tour du rotor
*q*
associé à l'échantillon absolu
*n*
est déterminé. Connaissant le nombre d'échantillons
*N*
dans un tour de rotor, ce tour de rotor
*q*
est

$$q = floor(n/N) + 1, \text{ ou}$$

*floor(x)*
est l'entier le plus grand et inférieur à
*x*

. Dans une seconde étape la position relative de l'échantillon

$\bar{n}$
est déterminée en utilisant la formule

$$\bar{n} = \lfloor (n-1)/N \rfloor + 1$$

Ainsi connaissant le position relative

$\bar{n}$

, il est possible de sélectionner le bon vecteur

$x[\overline{n}]$

associé à l'échantillon absolu

$n$

et ensuite au sein du vecteur

$x[\overline{n}]$

la valeur

$\hat{x}[n]$

est obtenue par la sélection de l'échantillon

$q$

du vecteur

$x[\overline{n}]$

Dans un mode de réalisation, l'étape de détermination 501-a d'une énergie de la troisième composante est réalisée en sommant le carré des échantillons de la troisième composante sur un tour du rotor. Cette sommation est réalisée indépendamment pour chaque aube. Ainsi cette énergie est obtenue comme étant:

$$I_r[q] = \sqrt{\frac{1}{N}\sum_{\overline{n}=1}^{N} \hat{x}_r[\overline{n}+(q-1).N]^2}$$

dans laquelle :

$I_r[q]$

est la valeur de l'énergie, sur le tour

$q$

du rotor, de la troisième composante associée à la aube

$r$

,

$N$

est le nombre d'échantillons du signal d'entrée, éventuellement rééchantillonné, associés au tour

$q$

,

$\hat{x}_r[n]$

est l'échantillon

$n$

de la troisième composante associée à la aube

$r$

.

Pour calculer le seuil de détection, l'énergie de la troisième composante sur une pluralité de tours de référence est utilisée. Ce seuil de détection est basé sur la moyenne de l'énergie de la troisième composante sur une pluralité de tours de référence (

$$\mu_r^{(ref)} = \frac{1}{Q_{ref}}\sum_{q=1}^{Q_{ref}} I_r[q]$$

) ainsi que sur l'écart type de cette énergie (

$$\sigma_r^{(ref)} = \sqrt{\frac{1}{Q_{ref}}\sum_{q=1}^{Q_{ref}} I_r[q]^2}$$

). Ce seuil a alors la forme suivante :

$$\lambda_r = \mu_r^{(ref)} + 3\sigma_r^{(ref)}$$

. Dans ces différentes équations :

-

$\lambda_r$

est le seuil prédéterminé associé à l'aube

$r$

,

$Q_{ref}$

est un nombre de tours de rotor prédéterminé,

$I_r[q]$

est la valeur de l'énergie, sur le tour

$q$

, de la troisième composante associée à l'aube

$r$.

Il est possible de définir un intervalle de confiance associé à ce seuil de détection, qui peut être déterminé de la manière suivante :
Détermination d'une densité de probabilité empirique des indicateurs en faisant l'hypothèse de l'absence de touche et en utilisant des signaux de références dans lesquels il n'y a pas de touche.

A partir de cette densité de probabilité empirique, détermination des intervalles de confiance.

Ainsi ce mode de réalisation permet de calculer un seuil en fonction de la moyenne et de l'écart type de l'indicateur sur un nombre

$Q_{ref}$

de cycles pris comme référence. Ces cycles de référence sont des cycles durant lesquels il n'y a pas de touche entre une aube du rotor et le stator.

Dans un mode de réalisation le dispositif de surveillance 107 ou le procédé de surveillance sont configurés pour permettre à l'utilisateur de préciser :

- les paramètres de la turbomachine (par exemple le nombre d'aubes) et
- les paramètres utilisés pour détecter les touches (par exemple l'ordre du polynôme modélisant le signal d'entrée et donc le nombre de paramètres de ce modèle du signal d'entrée, le type de la fenêtre de séparation, l'intervalle de confiance associé au seuil de détection).

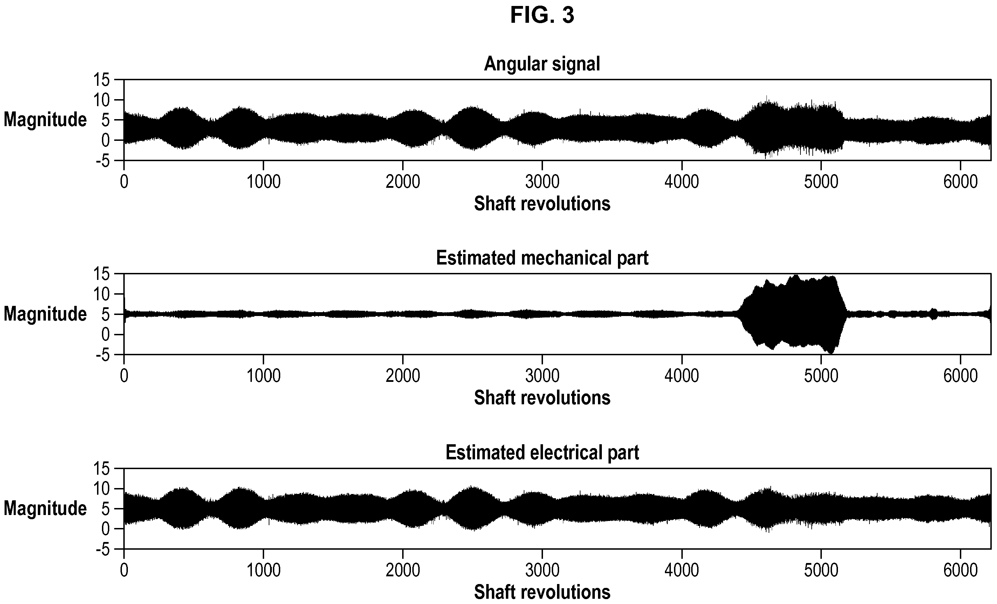

Les figures 3 à 5 représentent l'effet des différentes étapes du procédé de surveillance apte à la détection d'une touche, sur un signal en provenance de la jauge de déformation 106. Le signal utilisé sur ces figures est un signal réel mesuré sur une turbomachine comportant trois aubes.

La figure 3 représente, sur la courbe du haut, l'amplitude du signal reçu de la jauge de déformation 106. Ce signal comporte une première composante, représentative de déformations du stator 103 ou du rotor 104 causées par une rotation des aubes 105 du rotor 104 par rapport au stator 103, et une deuxième composante, représentative de déformations causées par des éléments distincts des aubes du rotor. La courbe du milieu représente le signal filtré par l'étape de filtrage 204. Dans ce signal filtré la deuxième composante a été fortement atténuée. Ainsi la courbe du milieu représente principalement la première composante du signal reçu de la jauge de déformation. Ce signal filtré correspond à la contribution de l'ensemble des aubes sur la première composante. En utilisant ce signal filtré il est possible de détecter facilement les instants de contacts des aubes (à partir du tour 4500 et jusqu'au tour 5200). A titre de comparaison ces même instants ne sont pas détectables dans le signal de la courbe du haut, car la première composante est cachée par le bruit généré par la deuxième composante. Enfin, la courbe du bas de la figure 3 représente la deuxième composante du signal reçu de la jauge de déformation 106.

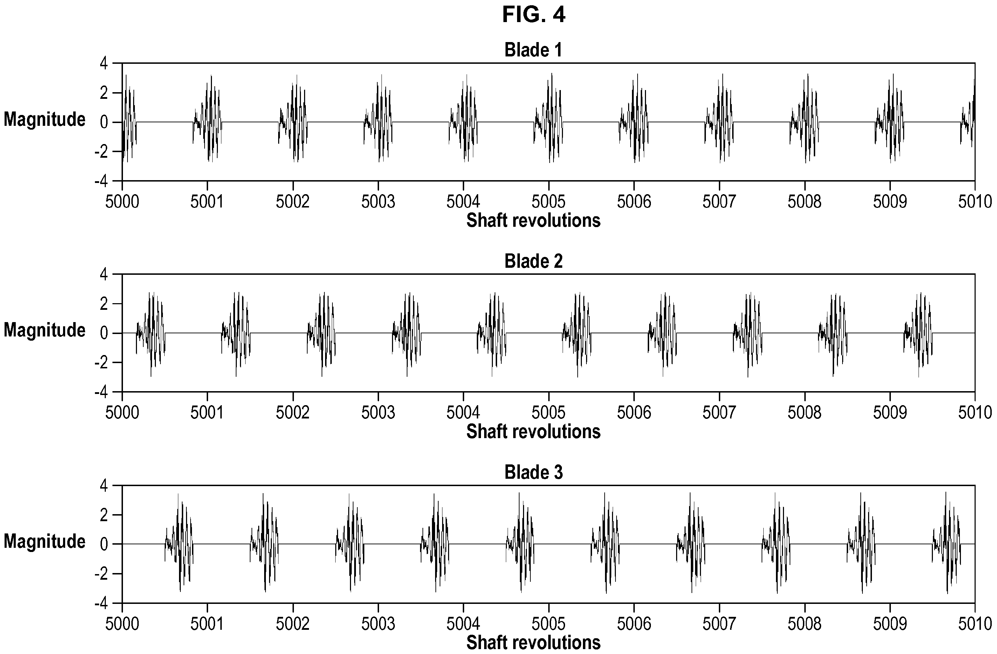

La figure 4 représente l'effet de la séparation du signal filtré en une pluralité de troisièmes composantes, chaque troisième composante étant représentative d'une contribution à la déformation causée par l'une des trois aubes. Le signal filtré est celui obtenu sur la courbe du milieu de la figure 3. Les signaux de la figure 4 représentent ces troisièmes composantes pour les tours allant du tour 5000 à 5010.

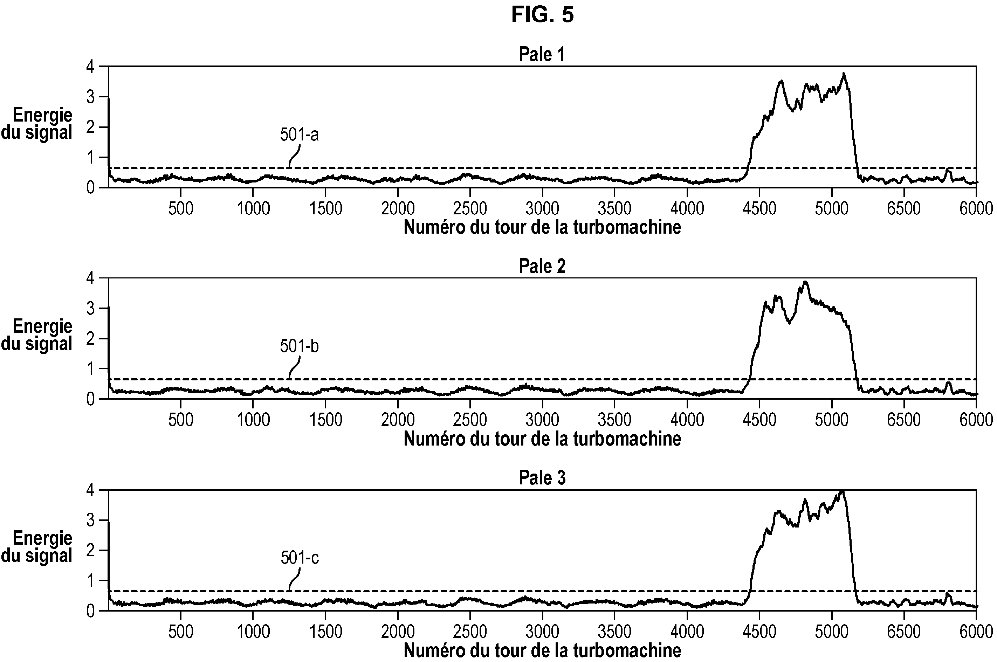

La figure 5 représente l'énergie des troisièmes composantes associées au trois aubes de la turbomachine. Ces trois courbes sont représentées respectivement avec trois seuils de détection 501-a à 501-c. Ainsi entre les tours 4400 à 5200, les énergies des troisièmes composantes sont supérieures aux seuils de détection ce qui correspond à la détection de touches.

Dans l'étape 202 de rééchantillonnage, le signal reçu de la jauge de déformation 106 est transformé en un signal angulaire $x(\theta)$ à partir du capteur 108 « top-pale » mesurant les passages des pales de la turbomachine. On note $\Theta$ l'angle de rotation de l'arbre d'une turbomachine à P pales (rotation complète de l'arbre de la turbomachine).

La première pale sera centrée sur l'angle $\theta = 0 + k\Theta$ ($k$ est un entier), la deuxième pale sera centrée sur l'angle à $\theta = \Theta/P + k\Theta$, la troisième pale sera centrée sur l'angle à $\theta = 2 * \Theta/P + k\Theta$ et la $i^{\text{ème}}$ pale sera centrée sur l'angle $\theta = i * \Theta/P + k\Theta$.

La multiplication du signal d'entrée filtré (par la moyenne synchrone polynomiale) par une fenêtre cyclique (qui se répète à chaque rotation complète), permet d'obtenir la contribution de la pale i si le centre de cette fenêtre est aligné avec la position angulaire de la pale. L'équation générique de cette fenêtre est :

$$F(\theta) = \sum_{q=1}^{Q} f[\theta - q.\Theta]$$

Pour la première pale, l'équation de la fenêtre utilisée est la suivante :

$$F_0(\theta) = F(\theta) = \sum_{q=1}^{Q} f[\theta - q.\Theta]$$

Pour la deuxième pale, la fenêtre utilisée pour la première pale est décalée de l'angle séparant deux pales (cet angle est égal à l'angle de rotation de la turbomachine divisé par le nombre de pales $\Theta/P$), l'équation de la fenêtre utilisée est la suivante :

$$F_1(\theta) = F(\theta - \Theta/P) = \sum_{q=1}^{Q} f[\theta - q.\Theta - \Theta/P]$$

Pour la troisième pale, la fenêtre utilisée pour la première pale est décalée de deux fois l'angle séparant deux pales, l'équation de la fenêtre utilisée est la suivante :

$$F_2(\theta) = F(\theta - 2 * \Theta/P) = \sum_{q=1}^{Q} f[\theta - q.\Theta - 2.\Theta/P]$$

Pour la $i^{\text{ème}}$ pale, la fenêtre utilisée pour la première pale est décalée de i fois l'angle séparant deux pales, l'équation de la fenêtre utilisée est la suivante :

$$F_i(\theta) = F(\theta - i * \Theta/P) = \sum_{q=1}^{Q} f[\theta - q.\Theta - i.\Theta/P]$$

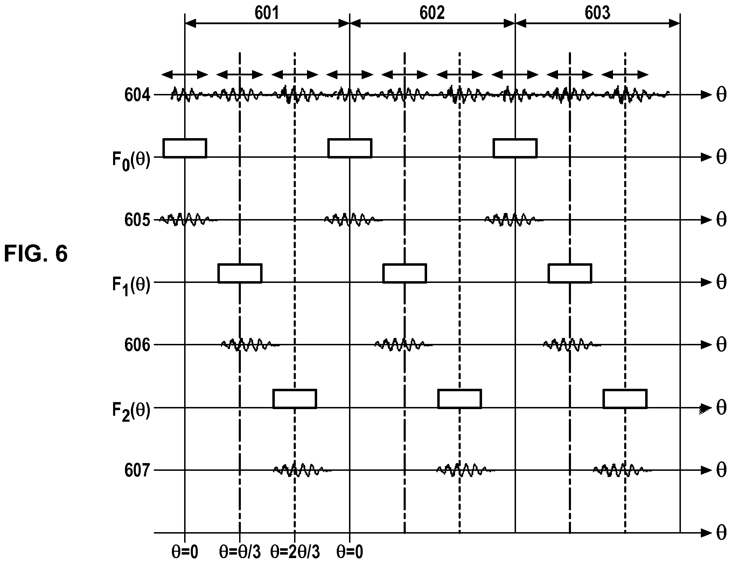

La figure 6 illustre cette étape de séparation 207 pour une turbomachine comprenant trois pales. Sur cette figure, le temps est représenté en s'écoulant de gauche à droite, avec en 601 la première tour de la turbomachine, en 602 le deuxième tour et en 603 le troisième tour. En 604, la contribution de l'ensemble des pales est représentée. En 605, la contribution de la première pale est représentée. Cette contribution est obtenue en multipliant la contribution de l'ensemble des pales par la fenêtre $F_0(\theta)$. En 606, la contribution de la deuxième pale est représentée. Cette contribution est obtenue en multipliant la contribution de l'ensemble des pales par la fenêtre $F_1(\theta)$. En 607, la contribution de la troisième pale est représentée. Cette contribution est obtenue en multipliant la contribution de l'ensemble des pales par la

fenêtre $F_2(\Theta)$.

**Revendications**

1. Procédé de surveillance d'une turbomachine (102) comprenant un stator (103) et un rotor (104) et une jauge de déformation (106) fixée au stator (103) ou au rotor (104), la jauge de déformation (106) étant apte à capturer un signal d'entrée comprenant une première composante représentative de déformations du stator (103) ou du rotor (104) causées par une rotation des aubes (105) du rotor (104) par rapport au stator (103), et une deuxième composante représentative de déformations du stator (103) ou du rotor (104) causées par des éléments distincts des aubes du rotor, le procédé comprenant :

   - une étape (201) d'acquisition du signal d'entrée
   - une étape (202) de rééchantillonnage du signal d'entrée pour obtenir un signal d'entrée rééchantillonné comprenant un nombre entier prédéfini d'échantillons par tour du rotor (104) de la turbomachine (102) **caractérisé en ce qu'**il comprend en outre:
   - une étape (203) de traitement du signal d'entrée rééchantillonné, comprenant :

      - un filtrage (204) du signal d'entrée rééchantillonné permettant d'atténuer la deuxième composante, ledit filtrage comprenant les étapes suivantes :

         - une étape (205) de détermination de valeurs d'une pluralité de paramètres d'un modèle représentatif du signal d'entrée rééchantillonné ;
         - une étape (206) de détermination d'un signal d'entrée modélisé en utilisant le modèle ainsi que les valeurs de la pluralité de paramètres ; et,

         - une séparation (207) du signal d'entrée modélisé en une pluralité de troisièmes composantes, chaque troisième composante étant représentative d'une contribution à la déformation causée par une aube (105) associée respective, la séparation comprenant un fenêtrage du signal d'entrée modélisé à l'aide de différentes fenêtres temporelles de sorte à obtenir la pluralité de troisièmes composantes;

   le procédé comprenant également :

      - une étape (208) de détection, dans une troisième composante, d'une touche entre l'aube (105) associée à la troisième composante et le stator (103).

2. Procédé de surveillance selon la revendication 1, dans lequel :

   - lors de l'étape (205) de détermination des valeurs de la pluralité de paramètres, les valeurs de la pluralité de paramètres sont déterminées comme étant celles minimisant un écart entre le signal d'entrée rééchantillonné et un signal d'entrée modélisé en utilisant le modèle représentatif ainsi que lesdites valeurs.

3. Procédé de surveillance selon l'une des revendications 1 et 2, dans lequel :

   - l'étape (205) de détermination des valeurs de la pluralité de paramètres du modèle utilise l'équation suivante :

$$\hat{b} = \left(\Phi^{\mathrm{T}}\Phi\right)^{-1}\Phi^{\mathrm{T}}x$$

   dans laquelle :

      $\hat{b}$ est un vecteur colonne de taille P contenant les valeurs de P paramètres du modèle représentatif,
      $\Phi$ est une matrice de taille Q*P dans laquelle l'élément à la ligne q et la colonne p a la valeur $p^{q-1}$,
      x est un vecteur colonne de taille Q contenant des échantillons du signal d'entrée rééchantillonné, durant un nombre Q de tours du rotor.

4. Procédé de surveillance selon l'une des revendications 1 à 3 dans lequel :

- l'étape (206) de détermination d'un signal d'entrée modélisé utilise l'équation suivante :

$$\widehat{x} = \Phi\widehat{b}$$

dans laquelle :

$\widehat{b}$ est un vecteur colonne de taille P contenant les valeurs de P paramètres du modèle représentatif,
$\Phi$ est une matrice de taille Q*P dans laquelle l'élément à la ligne q et la colonne p a la valeur $p^{q-1}$,
x est un vecteur colonne de taille Q contenant des échantillons du signal d'entrée rééchantillonné, durant un nombre Q de tours du rotor.

5. Procédé de surveillance selon l'une des revendications 1 à 4, dans lequel la séparation (207) de l'étape (203) de traitement du signal utilise l'équation suivante :

$$\hat{x}_r[n] = \hat{x}[n]F(r - r/R)$$

dans laquelle :

$\hat{x}_r[n]$ est l'échantillon $n$ de la troisième composante associée à l'aube $r$,
$\hat{x}[n]$ est l'échantillon $n$ du signal modélisé,

$$F(r) = \sum_{q=1}^{Q} f[n - q.N] \quad \text{avec} \quad f[n] = \begin{cases} 1 & si \quad -r/2R \leq n \leq r/2R \\ 0 & ailleurs \end{cases}$$

est un signal fenêtré associé à l'aube r,
Q est un nombre de tours du rotor pendant une durée total du signal d'entrée modélisé,
R est un nombre total d'aubes du rotor.

6. Procédé de surveillance selon l'une des revendications 1 à 5, dans lequel :

- l'étape de détection (208), dans une troisième composante, d'une touche entre l'aube associée à la troisième composante et le stator, comprend des étapes de :

- détermination (209) d'une énergie de la troisième composante sur au moins un premier tour du rotor ;
- comparaison (210) entre l'énergie déterminée et un seuil prédéterminé, la touche étant détectée ou non en fonction de la comparaison.

7. Procédé de surveillance selon la revendication 6, dans lequel l'étape de détermination (209) de l'énergie de la troisième composante utilise l'équation suivante :

$$I_r[q] = \sqrt{\frac{1}{N} \sum_{\bar{n}=1}^{N} \hat{x}_r[\bar{n} + (q-1).N]^2}$$

dans laquelle :

$I_r[q]$ est la valeur de l'énergie, sur le tour $q$ du rotor, de la troisième composante associée à la aube r,
N est le nombre d'échantillons du signal d'entrée rééchantillonné dans le tour q,
$\hat{x}_r[n]$ est l'échantillon $n$ de la troisième composante associée à la aube r.

8. Procédé de surveillance selon la revendication 6 ou 7, dans lequel le seuil prédéterminé est calculé en fonction des équations suivantes:

$$\mu_r^{(ref)} = \frac{1}{Q_{ref}} \sum_{q=1}^{Q_{ref}} I_r[q]$$

$$\sigma_r^{(ref)} = \sqrt{\frac{1}{Q_{ref}} \sum_{q=1}^{Q_{ref}} I_r[q]^2|}$$

$$\lambda_r = \mu_r^{(ref)} + 3\sigma_r^{(ref)}$$

dans lesquelles :

$\lambda_r$ est le seuil prédéterminé associé à l'aube r,

$Q_{ref}$ est un nombre de tours de rotor prédéterminé,

$I_r[q]$ est la valeur de l'énergie, sur le tour q, de la troisième composante associée à l'aube r.

9. Dispositif (107) de surveillance d'une turbomachine (102) comprenant un stator (103) et un rotor (104) et une jauge de déformation (106) fixée au stator (103) ou au rotor (104), la jauge de déformation (106) étant apte à capturer un signal d'entrée représentatif d'une déformation du stator (103) ou du rotor (104) de la turbomachine, le signal d'entrée comprenant une première composante représentative de déformations du stator (103) ou du rotor (104) causées par une rotation des aubes (105) du rotor (104) par rapport au stator (103), et une deuxième composante représentative de déformations du stator (103) ou du rotor (104) causées par des éléments distincts des aubes du rotor, le dispositif (107) comprenant :

- une entrée (107-a) pour acquérir le signal d'entrée, **caractérisé par**:
- une unité (107-b) de traitement de données configurée pour réaliser les étapes suivantes :
- une étape (201) d'acquisition du signal d'entrée et
- une étape (202) de rééchantillonnage du signal d'entrée pour obtenir un signal d'entrée rééchantillonné comprenant un nombre entier prédéfini d'échantillons par tour du rotor (104) de la turbomachine (102) et
- une étape (203) de traitement du signal d'entrée rééchantillonné comprenant ;
- un filtrage (204) du signal d'entrée rééchantillonné permettant d'atténuer la deuxième composante, le filtrage comprenant :

- une étape (205) de détermination de valeurs d'une pluralité de paramètres d'un modèle représentatif du signal d'entrée rééchantillonné ;
- une étape (206) de détermination d'un signal d'entrée modélisé en utilisant le modèle ainsi que les valeurs de la pluralité de paramètres ; et,
- une séparation (207) du signal d'entrée modélisé en une pluralité de troisièmes composantes, chaque troisième composante étant représentative d'une contribution à la déformation causée par un aube (105) associée respective, la séparation comprenant un fenêtrage du signal d'entrée filtré à l'aide de différentes fenêtres temporelles de sorte à obtenir la pluralité de troisièmes composantes ;

l'unité (107-b) de traitement de données étant également configurée pour réaliser une étape (208) de détection, dans une troisième composante, d'une touche entre l'aube (105) associée à la troisième composante et le stator (103).

10. Système de surveillance comprenant :

- le dispositif (107) de surveillance selon la revendication 9,
- une jauge (106) de déformation propre à délivrer un signal d'entrée représentatif d'une déformation du stator (103) ou du rotor (104) de la turbomachine (102);
- la jauge de déformation étant reliée à l'entrée (107-a) du dispositif (107) de surveillance.

11. Aéronef (101), comprenant :

- une turbomachine (102) comprenant un stator (103) et un rotor (104) propre à être entrainé en rotation par rapport au stator (103), et
- un système de surveillance conforme à la revendication 10, dans lequel la jauge de déformation (106) est fixée au stator (103) ou au rotor (104).

12. Produit programme d'ordinateur comprenant des instructions de code de programme pour l'exécution des étapes du procédé de surveillance d'une turbomachine (102) selon l'une des revendications 1 à 8, lorsque ce produit programme est exécuté par au moins une unité de traitement de données (107-b).

**Patentansprüche**

1. Verfahren zur Überwachung einer Turbomaschine (102), umfassend einen Stator (103) und einen Rotor (104) und einen Verformungsmesser (106), der an dem Stator (103) oder an dem Rotor (104) befestigt ist, wobei der Verformungsmesser (106) imstande ist, ein Eingangssignal zu erfassen, das eine erste Komponente umfasst, die für Verformungen des Stators (103) oder des Rotors (104) repräsentativ ist, die durch eine Drehung der Schaufeln (105) des Rotors (104) relativ zu dem Stator (103) verursacht werden, und eine zweite Komponente, die für Verformungen des Stators (103) oder des Rotors (104) repräsentativ ist, die durch Elemente verursacht werden, die von den Schaufeln des Rotors unterschiedlich sind, wobei das Verfahren umfasst:

- einen Schritt (201) des Erfassens des Eingangssignals,
- einen Schritt (202) des Resamplings des Eingangssignals, um ein resampeltes Eingangssignal zu erhalten, das eine vordefinierte ganzzahlige Anzahl von Samples pro Umdrehung des Rotors (104) der Turbomaschine (102) umfasst, **dadurch gekennzeichnet, dass** es ferner umfasst:

- einen Schritt (203) des Verarbeitens des resampelten Eingangssignals, umfassend:

- eine Filterung (204) des resampelten Eingangssignals, die erlaubt, die zweite Komponente zu dämpfen, wobei die Filterung die folgenden Schritte umfasst:

- einen Schritt (205) des Bestimmens von Werten einer Vielzahl von Parametern eines Modells, das für das resampelte Eingangssignal repräsentativ ist;
- einen Schritt (206) des Bestimmens eines modellierten Eingangssignals unter Verwendung des Modells sowie der Werte der Vielzahl von Parametern; und
- eine Trennung (207) des modellierten Eingangssignals in eine Vielzahl von dritten Komponenten, wobei jede dritte Komponente für einen Beitrag zu der Verformung repräsentativ ist, die durch eine jeweilige zugeordnete Schaufel (105) verursacht wird, wobei die Trennung eine Fensterung des modellierten Eingangssignals mit verschiedenen Zeitfenstern umfasst, um die Vielzahl von dritten Komponenten zu erhalten;
wobei das Verfahren ebenfalls umfasst:

- einen Schritt (208) des Detektierens, in einer dritten Komponente, einer Berührung zwischen der der dritten Komponente zugeordneten Schaufel (105) und dem Stator (103).

2. Überwachungsverfahren nach Anspruch 1, wobei:

- bei dem Schritt (205) des Bestimmens der Werte der Vielzahl von Parametern die Werte der Vielzahl von Parametern als diejenigen bestimmt werden, die eine Abweichung zwischen dem resampelten Eingangssignal und einem modellierten Eingangssignal unter Verwendung des repräsentativen Modells sowie der Werte minimieren.

3. Überwachungsverfahren nach einem der Ansprüche 1 und 2, wobei:

- der Schritt (205) des Bestimmens der Werte der Vielzahl von Parametern des Modells die folgende Gleichung verwendet:

$$\hat{b} = (\Phi^T \Phi)^{-1} \Phi^T x$$

wobei:

$\hat{b}$ ein Spaltenvektor der Größe P ist, der die Werte von P Parametern des repräsentativen Modells enthält,
$\Phi$ eine Matrix der Größe Q*P ist, wobei das Element in Zeile q und Spalte p den Wert $p^{q-1}$ hat,
x ein Spaltenvektor der Größe Q ist, der Samples des resampelten Eingangssignals enthält, während einer Anzahl Q von Rotorumdrehungen.

4. Überwachungsverfahren nach einem der Ansprüche 1 bis 3, wobei:

- der Schritt (206) des Bestimmens eines modellierten Eingangssignals die folgende Gleichung verwendet:

$$\hat{x} = \Phi\hat{b}$$

wobei:

$\hat{b}$ ein Spaltenvektor der Größe P ist, der die Werte von P Parametern des repräsentativen Modells enthält,
$\Phi$ eine Matrix der Größe Q*P ist, wobei das Element in Zeile q und Spalte p den Wert $p^{q-1}$ hat,
x ein Spaltenvektor der Größe Q ist, der Samples des resampelten Eingangssignals enthält, während einer Anzahl Q von Rotorumdrehungen.

5. Überwachungsverfahren nach einem der Ansprüche 1 bis 4, wobei die Trennung (207) des Signalverarbeitungsschritts (203) die folgende Gleichung verwendet:

$$\hat{x}_r[n] = \hat{x}[n]F(r - r/R)$$

wobei:

$\hat{x}_r[n]$ das Sample $\overline{n}$ der dritten Komponente ist, die der Schaufel $r$ zugeordnet ist,
$\hat{x}[n]$ das Sample $\overline{n}$ des modellierten Signals ist,

$$F(r) = \sum_{q=1}^{Q} f[n - q.N] \quad \text{mit} \quad f[n] = \begin{cases} 1 & wenn - r/2R \leq n \leq r/2R \\ 0 & anderswo \end{cases}$$

ein gefenstertes Signal ist, das der Schaufel r zugeordnet ist,
Q eine Anzahl von Rotorumdrehungen während einer Gesamtdauer des modellierten Eingangssignals ist,
R eine Gesamtzahl der Schaufeln des Rotors ist.

6. Überwachungsverfahren nach einem der Ansprüche 1 bis 5, wobei:

- der Schritt des Detektierens (208), in einer dritten Komponente, einer Berührung zwischen der der dritten Komponente zugeordneten Schaufel und dem Stator Schritte umfasst des:
- Bestimmens (209) einer Energie der dritten Komponente über mindestens eine erste Umdrehung des Rotors;
- Vergleichens (210) zwischen der bestimmten Energie und einem vorbestimmten Schwellenwert, wobei die Berührung in Abhängigkeit von dem Vergleich detektiert wird oder nicht.

7. Überwachungsverfahren nach Anspruch 6, wobei der Schritt des Bestimmens (209) der Energie der dritten Komponente die folgende Gleichung verwendet:

$$I_r[q] = \sqrt{\frac{1}{N} \sum_{\overline{n}=1}^{N} \hat{x}_r[\overline{n} + (q - 1).N]^2}$$

wobei:

$I_r[q]$ der Wert der Energie, über die Umdrehung $q$ des Rotors, der dritten Komponente ist, die der Schaufel $r$ zugeordnet ist,
N die Anzahl der Samples des resampelten Eingangssignals in der Umdrehung $q$ ist,
$\hat{x}_r[n]$ das Sample $n$ der dritten Komponente ist, die der Schaufel $r$ zugeordnet ist.

8. Überwachungsverfahren nach Anspruch 6 oder 7, wobei der vorbestimmte Schwellenwert in Abhängigkeit von den folgenden Gleichungen berechnet wird:

$$\mu_r^{(ref)} = \frac{1}{Q_{ref}} \sum_{q=1}^{Q_{ref}} I_r[q]$$

$$\sigma_r^{(ref)} = \sqrt{\frac{1}{Q_{ref}} \sum_{q=1}^{Q_{ref}} I_r[q]^2 \,|}$$

$$\lambda_r = \mu_r^{(ref)} + 3\sigma_r^{(ref)}$$

wobei:

$\lambda_r$ der vorbestimmte Schwellenwert ist, der der Schaufel r zugeordnet ist,
$Q_{ref}$ eine vorbestimmte Anzahl von Rotorumdrehungen ist,
$I_r[q]$ der Wert der Energie, über die Umdrehung $q$, der dritten Komponente ist, die der Schaufel $r$ zugeordnet ist.

9. Vorrichtung (107) zur Überwachung einer Turbomaschine (102), umfassend einen Stator (103) und einen Rotor (104) und einen Verformungsmesser (106), der an dem Stator (103) oder an dem Rotor (104) befestigt ist, wobei der Verformungsmesser (106) imstande ist, ein Eingangssignal zu erfassen, das für eine Verformung des Stators (103) oder des Rotors (104) der Turbomaschine repräsentativ ist, wobei das Eingangssignal eine erste Komponente umfasst, die für Verformungen des Stators (103) oder des Rotors (104) repräsentativ ist, die durch eine Drehung der Schaufeln (105) des Rotors (104) relativ zu dem Stator (103) verursacht werden, und eine zweite Komponente, die für Verformungen des Stators (103) oder des Rotors (104) repräsentativ ist, die durch Elemente verursacht werden, die von den Schaufeln des Rotors unterschiedlich sind, wobei die Vorrichtung umfasst:

- einen Eingang (107-a) zum Erfassen des Eingangssignals, **gekennzeichnet durch**:

- eine Datenverarbeitungseinheit (107-b), die ausgelegt ist, um die folgenden Schritte durchzuführen:

- einen Schritt (201) des Erfassens des Eingangssignals und
- einen Schritt (202) des Resamplings des Eingangssignals, um ein resampeltes Eingangssignal zu erhalten, das eine vordefinierte ganzzahlige Anzahl von Samples pro Umdrehung des Rotors (104) der Turbomaschine (102) umfasst, und
- einen Schritt (203) des Verarbeitens des resampelten Eingangssignals, umfassend:

- eine Filterung (204) des resampelten Eingangssignals, die erlaubt, die zweite Komponente zu dämpfen, wobei die Filterung umfasst:

- einen Schritt (205) des Bestimmens von Werten einer Vielzahl von Parametern eines Modells, das für das resampelte Eingangssignal repräsentativ ist;
- einen Schritt (206) des Bestimmens eines modellierten Eingangssignals unter Verwendung des Modells sowie der Werte der Vielzahl von Parametern; und
- eine Trennung (207) des modellierten Eingangssignals in eine Vielzahl von dritten Komponenten, wobei jede dritte Komponente für einen Beitrag zu der Verformung repräsentativ ist, die durch eine jeweilige zugeordnete Schaufel (105) verursacht wird, wobei die Trennung eine Fensterung des gefilterten Eingangssignals mit verschiedenen Zeitfenstern umfasst, um die Vielzahl von dritten Komponenten zu erhalten;

wobei die Datenverarbeitungseinheit (107-b) ebenfalls ausgelegt ist, um einen Schritt (208) des Detektierens, in einer dritten Komponente, einer Berührung zwischen der der dritten Komponente zugeordneten Schaufel (105) und dem Stator (103) durchzuführen.

10. Überwachungssystem, umfassend:

- die Überwachungsvorrichtung (107) nach Anspruch 9,
- einen Verformungsmesser (106), der imstande ist, ein Eingangssignal zu liefern, das für eine Verformung des Stators (103) oder des Rotors (104) der Turbomaschine (102) repräsentativ ist;

- wobei der Verformungsmesser mit dem Eingang (107-a) der Überwachungsvorrichtung (107) verbunden ist.

11. Luftfahrzeug (101), umfassend:

- eine Turbomaschine (102), umfassend einen Stator (103) und einen Rotor (104), der imstande ist, relativ zum Stator (103) drehend angetrieben zu werden, und
- ein Überwachungssystem nach Anspruch 10, wobei der Verformungsmesser (106) an dem Stator (103) oder an dem Rotor (104) befestigt ist.

12. Rechnerprogrammprodukt, umfassend Programmcodeanweisungen für die Ausführung der Schritte des Verfahrens zur Überwachung einer Turbomaschine (102) nach einem der Ansprüche 1 bis 8, wenn dieses Programmprodukt von mindestens einer Datenverarbeitungseinheit (107-b) ausgeführt wird.

**Claims**

1. A method for monitoring a turbomachine (102) comprising a stator (103) and a rotor (104) and a deformation gauge (106) attached to the stator (103) or to the rotor (104), the deformation gauge (106) being able to acquire an input signal comprising a first component representative of deformations of the stator (103) or of the rotor (104) caused by the rotation of the blades (105) of the rotor (104) with respect to the stator (103), and a second component representative of deformations of the stator (103) or of the rotor (104) caused by elements separate from the blades of the rotor, the method comprising:

- a step (201) of acquiring the input signal
- a step (202) of re-sampling the input signal to obtain a re-sampled input signal comprising a predefined integer number of samples per revolution of the rotor (104) of the turbomachine (102)

**characterized in that** it further comprises:

- a step (203) of processing the re-sampled input signal, comprising;

- a filtering (204) of the re-sampled input signal to attenuate the second component, said filtering comprising the following steps:

- a step (205) of determining values of a plurality of parameters of a model representative of the re-sampled input signal;
- a step (206) of determining a modeled input signal using the model and also the values of the plurality of parameters; and

- the separation (207) of the modeled input signal into a plurality of third components, each third component being representative of a contribution to the deformation caused by a respective associated blade (105), the separation comprising a windowing of the modeled input signal using different time-domain windows, so as to obtain the plurality of third components;

the method also comprising:

- a step (208) of detecting, in a third component, a rub between the blade (105) associated with the third component and the stator (103).

2. The monitoring method as claimed in claim 1, wherein:

- in the step (205) of determining the values of the plurality of parameters, the values of the plurality of parameters are determined as being those minimizing a deviation between the re-sampled input signal and an input signal modeled using the representative model and also said values.

3. The monitoring method as claimed in one of claims 1 and 2, wherein:

- the step (205) of determining the values of the plurality of parameters of the model uses the following equation:

$$\hat{b} = (\Phi^T \Phi)^{-1} \Phi^T x$$

wherein:

$\hat{b}$ is a column vector of size P containing the values of P parameters of the representative model,
$\Phi$ is a matrix of size Q*P wherein the element in the row q and the column p has the value $p^{q-1}$,
x is a column vector of size Q containing samples of the re-sampled input signal, during a number Q of revolutions of the rotor.

4. The monitoring method as claimed in one of claims 1 to 3, wherein:

- the step (206) of determining a modeled input signal uses the following equation:

$$\hat{x} = \Phi \hat{b}$$

wherein:

$\hat{b}$ is a column vector of size P containing the values of P parameters of the representative model,
$\Phi$ is a matrix of size Q*P wherein the element in the row q and the column p has the value $p^{q-1}$,
x is a column vector of size Q containing samples of the re-sampled input signal, during a number Q of revolutions of the rotor.

5. The monitoring method as claimed in one of claims 1 to 4, wherein the separation (207) of the step (203) of processing the signal uses the following equation:

$$\hat{x}_r[n] = \hat{x}[n]F(r - r/R)$$

wherein:

$\hat{x}_r[n]$ is the sample *n* of the third component associated with the blade r,
$\hat{x}[n]$ is the sample *n* of the modeled signal,

$$F(r) = \sum_{q=1}^{Q} f[n - q.N] \text{ with } f[n] = \begin{cases} 1 & if \ -r/2R \leq n \leq r/2R \\ 0 & elsewhere \end{cases}$$

is a windowed signal associated with the blade r,
Q is a number of revolutions of the rotor during a total duration of the modeled input signal,
R is a total number of blades of the rotor.

6. The monitoring method as claimed in one of claims 1 to 5, wherein:

- the step (208) of detecting, in a third component, a rub between the blade associated with the third component and the stator, comprises the steps of:
- determining (209) an energy of the third component over at least one first revolution of the rotor,
- making a comparison (210) between the determined energy and a given threshold, the rub being detected or not detected as a function of the comparison.

7. The monitoring method as claimed in claim 6, wherein the step of determining (209) the energy of the third component uses the following equation:

$$I_r[q] = \sqrt{\frac{1}{N}\sum_{\bar{n}=1}^{N} \hat{x}_r[\bar{n} + (q-1).N]^2}$$

wherein:

$I_r[q]$ is the value of the energy, over the revolution $q$ of the rotor, of the third component associated with the blade r,
N is the number of samples of the re-sampled input signal in the revolution q,
$\hat{x}_r[n]$ is the sample $n$ of the third component associated with the blade r.

8. The monitoring method as claimed in claim 6 or 7, wherein the given threshold is computed as a function of the following equations:

$$\mu_r^{(ref)} = \frac{1}{Q_{ref}}\sum_{q=1}^{Q_{ref}} I_r[q]$$

$$\sigma_r^{(ref)} = \sqrt{\frac{1}{Q_{ref}}\sum_{q=1}^{Q_{ref}} I_r[q]^2}$$

$$\lambda_r = \mu_r^{(ref)} + 3\sigma_r^{(ref)}$$

wherein:

$\lambda_r$ is the given threshold associated with the blade r,
$Q_{ref}$ is a given number of rotor revolutions,
$I_r[q]$ is the value of the energy, over the revolution q, of the third component associated with the blade *r*.

9. A device (107) for monitoring a turbomachine (102) comprising a stator (103) and a rotor (104) and a deformation gauge (106) attached to the stator (103) or to the rotor (104), the deformation gauge (106) being able to acquire an input signal representative of a deformation of the stator (103) or of the rotor (104) of the turbomachine, the input signal comprising a first component representative of deformations of the stator (103) or of the rotor (104) caused by the rotation of the blades (105) of the rotor (104) with respect to the stator (103), and a second component representative of deformations of the stator (103) or of the rotor (104) caused by elements separate from the blades of the rotor, the device (107) comprising:

- an input (107-a) for acquiring the input signal,

**characterized by**:

- a data-processing unit (107-b) configured to perform the following steps:

- a step (201) of acquiring the input signal and

- a step (202) of re-sampling the input signal to obtain a re-sampled input signal comprising a predefined integer number of samples per revolution of the rotor (104) of the turbomachine (102) and
- a step (203) of processing the re-sampled input signal comprising:

- a filtering (204) of the re-sampled input signal to attenuate the second component, the filtering comprising:

- a step (205) of determining values of a plurality of parameters of a model representative of the re-sampled input signal;
- a step (206) of determining a modeled input signal using the model and also the values of the plurality of parameters

- a separation (207) of the modeled input signal into a plurality of third components, each third component being representative of a contribution to the deformation caused by a respective associated blade (105), the separation comprising a windowing of the filtered input signal using different time-domain windows, so as to obtain the plurality of third components;

the data-processing unit (107-b) being also configured to perform a step (208) of detecting, in a third component, a rub between the blade (105) associated with the third component and the stator (103).

10. A monitoring system comprising:

- the monitoring device (107) as claimed in claim 9,
- a deformation gauge (106) suitable for delivering an input signal representative of a deformation of the stator (103) or of the rotor (104) of the turbomachine (102);
- the deformation gauge being connected to the input (107-a) of the monitoring device (107).

11. An aircraft (101), comprising:

- a turbomachine (102) comprising a stator (103) and a rotor (104) suitable for being rotationally driven with respect to the stator (103), and
- a monitoring system as claimed in claim 10, wherein the deformation gauge (106) is attached to the stator (103) or to the rotor (104).

12. A computer program product comprising program code instructions for executing the steps of the method for monitoring a turbomachine (102) as claimed in one of claims 1 to 8, when this program product is executed by at least one data-processing unit (107-b).

FIG. 1

# FIG. 2

**FIG. 3**

Angular signal

Estimated mechanical part

Estimated electrical part

**FIG. 4**

Blade 1

Blade 2

Blade 3

EP 4 070 068 B1

FIG. 5

EP 4 070 068 B1

**FIG. 6**

**EP 4 070 068 B1**

**Documents brevets cités dans la description**

- RU 2670771 C1
- WO 2018197086 A1
- RU 2280238 C1